# EUROPEAN PATENT SPECIFICATION

(11) **EP 2 637 366 B1**
(45) Date of publication and mention of the grant of the patent: **06.01.2021**
(21) Application number: 11837531.0
(22) Date of filing: 18.10.2011
(51) Int. Cl.: H04L 12/58, G06F 9/54

(54) **METHOD AND DEVICE FOR INTERPROCESS COMMUNICATION AND COMPUTER STORAGE MEDIUM**
VERFAHREN UND VORRICHTUNG ZUR INTERPROZESS-KOMMUNIKATION UND COMPUTERSPEICHERMEDIUM DAFÜR
PROCÉDÉ ET DISPOSITIF DE COMMUNICATION INTERPROCESSUS ET SUPPORT DE STOCKAGE INFORMATIQUE

(30) Priority: 05.11.2010 CN 201010536671
(43) Date of publication of application: 11.09.2013
(73) Proprietor: Tencent Technology (Shenzhen) Company Limited, Shenzhen, Guangdong 518044 (CN)
(72) Inventor: DENG, Libo, Shenzhen, Guangdong 518044 (CN); CHEN, Yi, Shenzhen, Guangdong 518044 (CN)
(74) Representative: Gunzelmann, Rainer
(86) International application number: PCT/CN2011/080904
(87) International publication number: WO 2012/059005

(56) References cited:
- EP-A2- 1 691 285
- CN-A- 1 859 327
- CN-A- 101 448 018
- CN-A- 101 572 710
- US-A1- 2001 052 012
- US-A1- 2005 177 835
- US-A1- 2005 276 284
- US-A1- 2005 289 555
- US-A1- 2006 174 016
- US-A1- 2006 182 137
- US-A1- 2009 103 515
- US-A1- 2009 254 919
- US-A1- 2010 162 275

## Description

### FIELD OF THE INVENTION

The present disclosure relates generally to the field of communication technology, and more particularly, to a method and apparatus for cross-process communication, and computer storage medium.

### BACKGROUND OF THE INVENTION

Cross-process communication refers to transition or exchange of information among different processes. In programs like QQ (an instant messenger software developed by Tencent), Flash or IE (Internet Explorer) services may be used; and therefore cross-process communication between the QQ main process and the Flash process or IE process is required to be launched. Conventional settlement of the cross-process communication is to set up a common memory between the QQ main process and the Flash process, and communicates through reading the common memory.

After analysis of the conventional settlement, it is discovered by the inventors of the present disclosure that at least the following drawback exists:
During the conventional settlement, whenever a cross-process communication is launched, a common memory shall be set up, as the communication channel, between the main process and a destination process; each destination process shall be separately loaded a service module, which causes a waste of the memory capacity.

US 2005/0289555 A1 concerns thread to thread communication. A first thread registers with a gateway for receiving communication. Registration includes identifying a location for receiving messages. The gateway maps message payloads received from second threads to the location of the first thread. The first thread detects a payload in the location and consumes it for processing.

US 2005/0177835 A1 concerns a method of inter-process communication between at least two application processes on one computer. One embodiment includes a first process of a first application determining a name of a first file in a file system of the computer, the name of the first file being associated with a second application, the first file containing information for the first process to connect to a second process of the second application for inter-process communication; and the first process initiating a first connection to the second process using the information contained in the first file; the first process communicating with the second process using the first connection if the first connection is successfully established; and the first process starting a third process of the second application if the first process fails to establish a connection with the second process.

### SUMMARY OF THE INVENTION

The present invention concerns a method according to claim 1, an apparatus according to claim 3, and a computer storage medium according to claim 5. Further aspects of the present invention are defined in the dependent claims.

It is provided by embodiments of the present disclosure a method and apparatus for cross-process communication. The technology is as below:
A method for cross-process communication includes:
receiving a request for cross-process communication sent by a first process;
setting up a communication channel with the first process according to the request for cross-process communication;
loading a service module corresponding to the request for cross-process communication; and
conducting a cross-process communication between a preset container process which is loaded with the service module cross-process and the first process through the communication channel.

An apparatus for cross-process communication includes:
a reception module configured to receive a request for cross-process communication sent by a first process;
a channel setup module configured to set up a communication channel with the first process according to the request for cross-process communication;
a loading module configured to load a service module corresponding to the request for cross-process communication; wherein the preset container process that has been loaded with the service module performs cross-process communication with the first process through the communication channel.

A computer storage medium for storing computer executable instructions, said computer executable instructions are configured for controlling the computer to conduct a method for posting updates of the contacts, wherein the method includes:
receiving a request for cross-process communication sent by a first process;
setting up a communication channel with the first process according to the request for cross-process communication;
loading a service module corresponding to the request for cross-process communication; and
conducting a cross-process communication between a preset container process which is loaded with the service module cross-process and the first process through the communication channel.

Accordingly, the advantages of the technology provided by the embodiments of the present disclosure are that:
the preset container process capable of loading multiple service modules is set up as the entrance; therefore when setting up the cross-process communication channel, it is just need to set up the communication channel between the communication process and the preset container process, and the corresponding service module is loaded onto the preset container process, which simplifies the set up procedure of the cross-process communication process, saves code and improves the communication efficiency.

### BRIEF DESCRIPTION OF THE DRAWINGS

For clearer description of embodiments of the present disclosure or the background technology, hereinafter makes a brief introduction to the drawings of the embodiments or the background technology. It is clear that, the below described drawings are for exemplary embodiments of the present disclosure, those skilled in the art could have other drawings according to the present drawings without paying creative efforts.
Fig. 1 is a flow chart of a method for cross-process communication according to an embodiment of the present disclosure.
Fig. 2 is a flow chart of a method for cross-process communication according to an embodiment of the present disclosure.
Fig. 3 is a schematic diagram of an apparatus for cross-process communication according to an embodiment of the present disclosure.
Fig. 4 is a schematic diagram of an apparatus for cross-process communication according to an embodiment of the present disclosure.
Fig. 5 is a schematic diagram of an apparatus for cross-process communication according to an embodiment of the present disclosure.

### DESCRIPTION OF THE PREFERRED EMBODIMENTS

For making the objective, technological scheme and advantage of the present disclosure clearer, further detailed description of the present disclosure would be made hereinafter with reference to the drawings.

### Embodiment 1

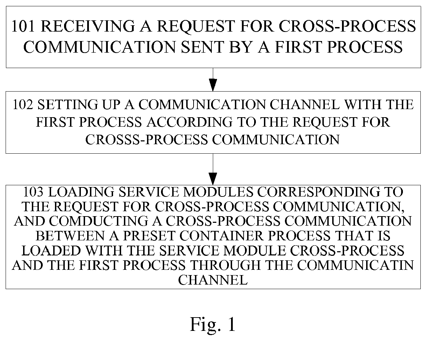

For code economy, it is provided by the embodiment of the present disclosure a method for cross-process communication. Referring to Fig. 1, the method includes:
101: receiving a request for cross-process communication initiated by a first process;
102: setting up a communication channel with the first process according to the request for cross-process communication;
103: loading a service module corresponding to the request for cross-process communication; therefore a preset container process which has been loaded with the service module could be able to carry out the cross-process communication with the first process.

Wherein, before said setting up a communication channel with the first process according to the request for cross-process communication, it is further included that:
detecting if a communication channel exists with the first process; and multiplex the communication channel if the communication channel exists with the first process; or set up a communication channel with the first process according to the request for cross-process communication if the communication channel does not exist with the first channel.

Wherein, the step of setting up a communication channel with the first process according to the request for cross-process communication includes in detail:
picking up a model assigned by the cross-process communication from the request for cross-process communication;
calling the assigned model in the preset container process, and setting up the communication channel between the first process and the preset container process.

Wherein, the preset container process includes a system model, a process model, a session model and a shared model.

The preset container process capable of loading multiple service modules is set up as the entrance; therefore when setting up the cross-process communication channel, it is just needed to set up the communication channel between the communication process and the preset container process, and the corresponding service module is loaded onto the preset container process, which simplifies the set up procedure of the cross-process communication process, saves code and improves the communication efficiency.

### Embodiment 2

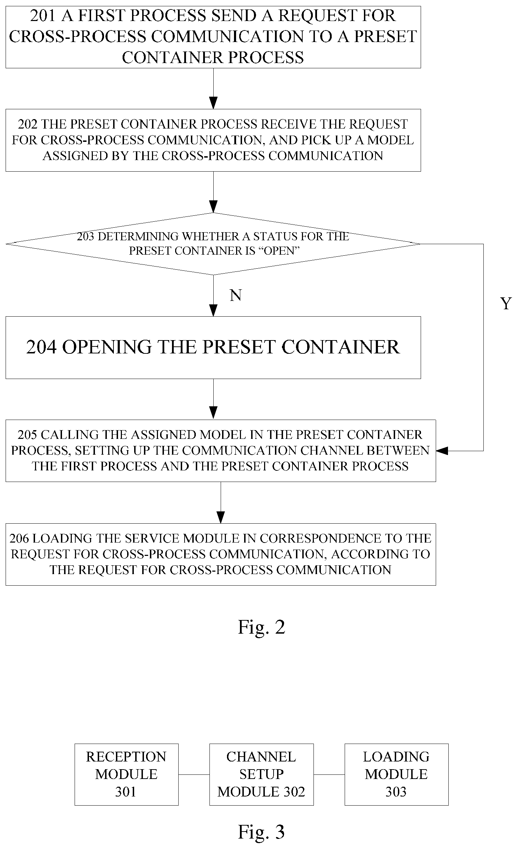

For code economy, it is provided by the embodiment of the present disclosure a method for cross-process communication. The embodiment takes the process that initiates the cross-process communication as the first process, with reference to Fig. 2, the method includes:
201: the first process initiates a request for cross-process communication to the preset container process; the request for cross-process communication carries two GUIDs (Globally Unique Identifier) that are dynamically generated by the first process. The two GUIDs include a first process identifier and a second process identifier. The first process identifier is used for identifying the process that initiates the request for cross-process communication; and the second process identifier is used for identifying the destination process of the cross-process communication, that is, the preset container process.

In detail, the two GUIDs function as identifying the processes, and initiating a common memory for the two ends of the cross-process communication. The memory for the communication from the first process to the preset container process is named by the second process identifier GUID, and is shared in common with all the first process. Such memory is allocated by the initiation of the preset container process, and released by the exit of the preset container process. While, the memory for the communication from the preset container process to the first process is privately assigned for the first process. To avoid conflict, the first process transmits the second process identifier GUID to the preset container process through a one-way channel from the first process to the preset container process.

According to the embodiment of the present disclosure, the first process may be various kinds of main processes, such as QQ, IM, etc; while the second process could be the preset container process. It shall be mentioned that, the preset container is a kind of container used for cross-process communication according to the embodiment of the present disclosure. The preset container is used for setting up a communication channel from the process that initiates the communication to the container process when a request for cross-process communication is received, and for loading corresponding service module according to the type of the request.

202: the preset container process receives the request for cross-process communication, and pick up the model assigned by the cross-process communication.

It shall be mentioned that, the preset container process includes a system model, a process model, a session model and a shared model; said model shall be any one or more models of the four models.

203: determining whether the status for the preset container is "open"; carry on step 205 if the status for the preset container is open or step 204 if it is not open.

The method for the determination could be various, it could be determined by detecting a service handler or a service process; the embodiment of the present disclosure would not limit on this.

204: opening the preset container.

In detail, after the preset container is launched, it is executed an initiation on the channel from the first process to the preset container, facilitating the followed up set up process of the channel.

205: calling the assigned model in the preset container process, and setting up the communication channel between the first process and the preset container process.

Those skilled in the art could have knowledge that, the preset container process includes many kinds of models, for serving different kinds of requests. However, the preset containers have uniform entrances and exits that are codes that have been packaged. The preset container provide a unique entrance for the system; as long as date of the entrance is received and corresponding preset execution according to the data of the entrance, processed data or operation could be output from the uniform data exit.

It could further be included before the step 205 that: detecting if a communication channel exists between the process that initiates the cross-process communication and the preset container; multiplexing the communication channel if the communication channel exists; or setting up a communication channel between the main process and the preset container according to the type of the request. This step could enable communication through the existing communication channel if there exists the communication channel; while loading the service module, it could be loaded either on the basis of the existing module or the corresponding service module after the existing module is unloaded. The step could omit the setup process of the channel, and further saves codes.

206: loading the service module in correspondence to the request for cross-process communication, according to the request for cross-process communication.

For the service module, the container models are transparent, which kind of container module is executed is not concerned. Preferably, the preset container in detail could be App container, which means that the process for different service module could be loaded; the process could be able to communicate with the main process of the application program. Each container body could be loaded with one or more service modules, and could be dynamically loaded with service modules accordingly when desires. The service module means dlls that could implement particular functions; and the dlls export entrance functions corresponding to the regulations.

Further, through the above step 201 to 206, after the preset container process that has been loaded with the service modules could be able to cross-process communicate with the first process through the communication channel, it is necessary to check the loading situation of the container, which means that the loading situation of the service modules shall be checked to determine whether the service modules corresponding to the request for cross-process communication are loaded. If un-loaded, the service module shall be re-loaded; and the container shall generate identifiers such as conversation ID, and send response to the first process. Consequently, service module export function OnSessionCreate is executed to inform that a new conversation has been set up.

It could be mentioned that, during the execution of the service module, the first process may call a service-waiting handler. If the service process ends up, the first process closes the conversation, and releases an inform event of conversation abnormal break. Upper level applications may determine whether to rebuild the conversation as needed. If there is existed a bug in the service module, each collapse would result in continuous collapse and restart of the service module, further causing the CPU occupancy rate reaches 100%, and affects the user experience. Accordingly, a maximum number of restart could be set, preferably, the number could be 3. Furthermore, the service module has an individual data reception thread; the data is received and broadcasted to the main thread where the business is located. In case the main thread is suspended, the data reception thread may detect. If the detection shows the main thread is suspended, a semaphore could be used for informing the first process; and the first process could accordingly close the conversation and release an inform event of conversation abnormal break. The first process could then determine whether to restart the conversation as needed.

In the above embodiment, the cross-process communication could be share memory communication or Socket communication in detail. If the Socket communication is used, it could be more natural to describe the streaming data communication of the conversation and the one-to-many connection management through the TCP. Wherein, the share memory communication is a kind of data communication executed by a circular queue based on the semaphore and the shared memory, the detailed information is public in the current technology, and would not be described herein.

According to the method as provided in the present disclosure, the preset container capable of loading multiple service modules is set up as the entrance; therefore when setting up the cross- process communication channel, it is just need to set up the communication channel between the communication process and the preset container process, and the corresponding service module is loaded onto the preset container process, which simplifies the set up procedure of the cross-process communication process, saves code and improves the communication efficiency.

### Embodiment 3

For coding economy, it is provided an apparatus for cross-process communications according to embodiment of the present disclosure. Referring to Fig. 3, the apparatus includes:
Reception module 301, which is configured for receiving a request for cross-process communication sent by the first process;
Channel setup module 302, which is configured for setting up a communication channel with the first process according to the request for cross-process communication;
Loading module 303, which is configured for loading service modules corresponding to the request for cross-process communication; the preset container process that has been loaded with the service modules performs the cross-process communication with the first process through the communication channel.

According to one embodiment, the loading module 303 could further be used for checking the loading situation of the service module, to determine whether the service module corresponding to the request for cross-process communication is loaded. If un-loaded, the service module shall be re-loaded, and the container shall generate conversation ID, and send response to the first process.

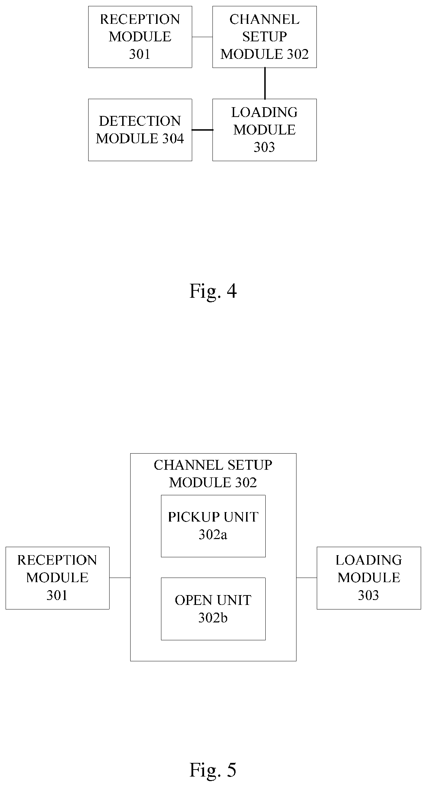

Referring to Fig. 4, the apparatus further includes:
Detection module 304, which is configured for detecting if a communication channel exists with the first process; to multiplex the communication channel if the communication channel exists; or to trigger the channel setup module to set up a communication channel with the first process according to the request for cross-process communication if the communication channel does not exist.

Referring to Fig. 5, the channel set up module 302 includes:
Pickup unit 302a, which is used for picking up a model assigned by the cross-process communication from the request for cross-process communication;

Open unit 302b, which is used for calling the assigned model in the preset container process, and setting up the communication channel between the first process and the preset container process;
According to an embodiment, the open module 302b could further be used for determining whether the status for the preset container is "open". Call the assigned model in the preset container process and set up the communication channel between the first process and the preset container process if the status for the preset container is open; or open the preset container if the status for the preset container is not open.

The preset container process includes a system model, a process model, a session model and a shared model.

According to one embodiment, the cross-process communication could be share memory communication or Socket communication.

The apparatus according to the embodiment of the present disclosure is of the same idea with the embodiment of the method, the detailed information could be found in the description of the embodiments of the method, and would not be described herein.

Whole or part of the technology according to the embodiments of the present disclosure could be carried by corresponding hardware instructed by programs; such program could be stored in readable storage medium which includes various kinds of medium that could store program codes such as ROM, RAM, magnetic disk or optical disk.

It is further provided by the present disclosure a computer storage medium stored with computer executable instructions, while the computer could execute instructions for carrying the above method for posting updates of the contacts.

## Claims

1. A method for cross-process communication, comprising:
receiving a request for cross-process communication sent by a first process; and
setting up a communication channel with the first process according to the request for cross-process communication,
**characterized by**
loading a service module corresponding to the request for cross-process communication, the service module being a DLL; and
conducting a cross-process communication between a preset container process which is loaded with the service module and the first process through the communication channel, wherein
the step of conducting the cross-process communication between the preset container process which is loaded with the service module and the first process through the communication channel further comprises:
checking a loading situation of the service modules, to determine whether the service module corresponding to the request for cross-process communication is loaded; and
if unloaded, reloading the service module, and sending response to the first process, wherein
before the step of setting up the communication channel with the first process according to the request for cross-process communication, the method further comprises:
detecting if a communication channel exists with the first process;
multiplexing the communication channel if the communication channel exists with the first process; and
setting up a communication channel with the first process according to the request for cross-process communication if the communication channel does not exist with the first process, wherein
a maximum number of restarts of the service module is set.

2. The method according to claim 1, wherein the cross-process communication is share memory communication or Socket communication.

3. An apparatus for cross-process communication comprising:
a reception module (301) configured to receive a request for cross-process communication sent by a first process; and
a channel setup module (302) configured to set up a communication channel with the first process according to the request for cross-process communication,
**characterized by**
a loading module (303) configured to load a service module corresponding to the request for cross-process communication, the service module being a DLL, wherein
a preset container process that has been loaded with the service modules performs cross-process communication with the first process through the communication channel, wherein the loading module (303) is further configured to check loading situation of the service module, to determine whether the service module corresponding to the request for cross-process communication is loaded; and if unloaded, reload the service module, and sends response to the first process, wherein the apparatus further comprises:
a detection module (304) configured to detect if a communication channel exists with the first process; to multiplex the communication channel if the communication channel exists; and to trigger the channel setup module to set up a communication channel with the first process according to the request for cross-process communication if the communication channel does not exist, wherein
a maximum number of restarts of the service module is set.

4. The apparatus according to claim 3, wherein the cross-process communication is share memory communication or Socket communication.

5. A computer storage medium for storing computer executable instructions, said computer executable instructions are configured for controlling the computer to conduct a method for posting updates of the contacts, wherein the method comprises:
receiving a request for cross-process communication sent by a first process; and
setting up a communication channel with the first process according to the request for cross-process communication,
**characterized by**
loading a service module corresponding to the request for cross-process communication, the service module being a DLL; and
conducting a cross-process communication between a preset container process which is loaded with the service module cross-process and the first process through the communication channel, wherein the step of conducting the cross-process communication between the preset container process which is loaded with the service module and the first process through the communication channel further comprises:
checking a loading situation of the service modules, to determine whether the service module corresponding to the request for cross-process communication is loaded; and
if unloaded, reloading the service module, and sending response to the first process, wherein before the step of setting up the communication channel with the first process according to the request for cross-process communication, the method further comprises:
detecting if a communication channel exists with the first process;
multiplexing the communication channel if the communication channel exists with the first process; and
setting up a communication channel with the first process according to the request for cross-process communication if the communication channel does not exist with the first process, wherein
a maximum number of restarts of the service module is set.

6. The computer storage medium according to claim 5, wherein the cross-process communication is share memory communication or Socket communication.

## Patentansprüche

1. Verfahren zur prozessübergreifenden Kommunikation, umfassend:
Empfangen einer Anforderung für prozessübergreifende Kommunikation, die von einem ersten Prozess gesendet wurde; und
Einrichten eines Kommunikationskanals mit dem ersten Prozess entsprechend der Anforderung für prozessübergreifende Kommunikation,
**gekennzeichnet durch**
Laden eines Dienstmoduls entsprechend der Anforderung für prozessübergreifende Kommunikation, wobei das Dienstmodul eine DLL ist; und
Durchführen einer prozessübergreifenden Kommunikation zwischen einem voreingestellten Containerprozess, der mit dem Dienstmodul geladen ist, und dem ersten Prozess über den Kommunikationskanal, wobei
der Schritt des Durchführens der prozessübergreifenden Kommunikation zwischen dem voreingestellten Containerprozess, der mit dem Dienstmodul geladen wird, und dem ersten Prozess über den Kommunikationskanal weiter umfasst:
Überprüfen einer Ladesituation der Dienstmodule, um festzustellen, ob das der Anfrage nach prozessübergreifender Kommunikation entsprechende Dienstmodul geladen ist; und
falls entladen, erneutes Laden des Dienstmoduls und Senden einer Antwort auf den ersten Prozess, wobei
das Verfahren vor dem Schritt des Einrichtens des Kommunikationskanals mit dem ersten Prozess gemäß der Anforderung für prozessübergreifende Kommunikation ferner umfasst
Erkennen, ob ein Kommunikationskanal mit dem ersten Prozess existiert;
Multiplexen des Kommunikationskanals, wenn der Kommunikationskanal mit dem ersten Prozess existiert; und
Einrichten eines Kommunikationskanals mit dem ersten Prozess gemäß der Anforderung für prozessübergreifende Kommunikation, wenn der Kommunikationskanal mit dem ersten Prozess nicht existiert, wobei
eine maximale Anzahl von Neustarts des Dienstmoduls festgelegt ist.

2. Verfahren nach Anspruch 1, wobei die prozessübergreifende Kommunikation eine Shared-Memory-Kommunikation oder Socket-Kommunikation ist.

3. Vorrichtung für prozessübergreifende Kommunikation, umfassend:
ein Empfangsmodul (301), das dazu eingerichtet ist, eine von einem ersten Prozess gesendete Anforderung für prozessübergreifende Kommunikation zu empfangen; und
ein Kanaleinrichtungsmodul (302), das dazu eingerichtet ist, einen Kommunikationskanal mit dem ersten Prozess entsprechend der Anforderung für prozessübergreifende Kommunikation einzurichten,
**gekennzeichnet durch**
ein Lademodul (303), das dazu eingerichtet ist, ein Dienstmodul zu laden, das der Anforderung für prozessübergreifende Kommunikation entspricht, wobei das Dienstmodul eine DLL ist, wobei
ein voreingestellter Containerprozess, der mit den Dienstmodulen geladen worden ist, eine prozessübergreifende Kommunikation mit dem ersten Prozess über den Kommunikationskanal durchführt, wobei das Lademodul (303) ferner so eingerichtet ist, dass es die Ladesituation des Dienstmoduls prüft, um zu bestimmen, ob das der Anforderung für prozessübergreifende Kommunikation entsprechende Dienstmodul geladen ist; und wenn es entladen ist, das Dienstmodul erneut lädt und eine Antwort an den ersten Prozess sendet, wobei die Vorrichtung ferner umfasst:
ein Erfassungsmodul (304), das dazu eingerichtet ist, zu erfassen, ob ein Kommunikationskanal mit dem ersten Prozess existiert; den Kommunikationskanal zu multiplexen, wenn der Kommunikationskanal existiert; und das Kanaleinrichtungsmodul zu veranlassen, einen Kommunikationskanal mit dem ersten Prozess gemäß der Anforderung für prozessübergreifende Kommunikation einzurichten, wenn der Kommunikationskanal nicht existiert, wobei
eine maximale Anzahl von Neustarts des Dienstmoduls festgelegt ist.

4. Vorrichtung nach Anspruch 3, wobei die prozessübergreifende Kommunikation eine Shared-Memory-Kommunikation oder Socket-Kommunikation ist.

5. Computerspeichermedium zum Speichern von computerausführbaren Befehlen, wobei die computerausführbaren Befehle so eingerichtet sind, dass sie den Computer so steuern, dass er ein Verfahren zum Posten von Aktualisierungen von Kontakten ausführt, wobei das Verfahren umfasst:
Empfangen einer Anforderung für prozessübergreifende Kommunikation, die von einem ersten Prozess gesendet wurde; und
Einrichten eines Kommunikationskanals mit dem ersten Prozess entsprechend der Anforderung für prozessübergreifende Kommunikation,
**gekennzeichnet durch**
Laden eines Dienstmoduls entsprechend der Anforderung für prozessübergreifende Kommunikation, wobei das Dienstmodul eine DLL ist; und
Durchführen einer prozessübergreifenden Kommunikation zwischen einem voreingestellten Containerprozess, der mit dem Dienstmodul prozessübergreifend geladen ist, und dem ersten Prozess über den Kommunikationskanal, wobei der Schritt des Durchführens der prozessübergreifenden Kommunikation zwischen dem voreingestellten Containerprozess, der mit dem Dienstmodul geladen ist, und dem ersten Prozess über den Kommunikationskanal ferner umfasst:
Überprüfen einer Ladesituation der Dienstmodule, um festzustellen, ob das der Anfrage nach prozessübergreifender Kommunikation entsprechende Dienstmodul geladen ist; und
wenn es entladen ist, erneutes Laden des Dienstmoduls und Senden einer Antwort an den ersten Prozess, wobei das Verfahren vor dem Schritt des Einrichtens des Kommunikationskanals mit dem ersten Prozess gemäß der Anforderung für prozessübergreifende Kommunikation ferner umfasst:
Erkennen, ob ein Kommunikationskanal mit dem ersten Prozess existiert;
Multiplexen des Kommunikationskanals, wenn der Kommunikationskanal mit dem ersten Prozess existiert; und
Einrichten eines Kommunikationskanals mit dem ersten Prozess gemäß der Anforderung für prozessübergreifende Kommunikation, wenn der Kommunikationskanal mit dem ersten Prozess nicht existiert, wobei
eine maximale Anzahl von Neustarts des Dienstmoduls festgelegt ist.

6. Computer-Speichermedium nach Anspruch 5, wobei die prozessübergreifende Kommunikation eine Shared-Memory-Kommunikation oder Socket-Kommunikation ist.

## Revendications

1. Procédé de communication interprocessus, consistant à :
recevoir une requête pour une communication interprocessus envoyée par un premier processus ; et
établir un canal de communication avec le premier processus selon la requête pour une communication interprocessus,
**caractérisé par**
le chargement d'un module de services correspondant à la requête pour la communication interprocessus, le module de services étant une DLL ; et
l'établissement d'une communication interprocessus entre un processus conteneur prédéfini qui est chargé avec le module de services et le premier processus par le canal de communication,
l'étape d'établissement de la communication interprocessus entre le processus conteneur prédéfini qui est chargé avec le module de services et le premier processus par le canal de communication consistant en outre à :
vérifier une situation de chargement des modules de services, pour déterminer si le module de services correspondant à la requête pour une communication interprocessus est chargé ;
et
dans le cas contraire, charger à nouveau le module de services, et envoyer la réponse au premier processus,
avant l'étape d'établissement du canal de communication avec le premier processus conformément à la requête pour la communication interprocessus, le procédé consistant en outre à :
détecter si un canal de communication existe avec le premier processus ;
multiplexer le canal de communication si le canal de communication existe avec le premier processus ; et
établir un canal de communication avec le premier processus conformément à la requête pour une communication interprocessus si le canal de communication n'existe pas avec le premier processus,
un nombre maximum de redémarrages du module de services étant fixé.

2. Procédé selon la revendication 1, la communication interprocessus étant une communication de mémoire partagée ou une communication par socket.

3. Appareil pour la communication interprocessus comprenant :
un module de réception (301) conçu pour recevoir une requête pour une communication interprocessus envoyée par un premier processus ; et
un module d'établissement de canal (302) conçu pour établir un canal de communication avec le premier processus conformément à la requête pour la communication interprocessus,
**caractérisé par**
un module de chargement (303) conçu pour charger un module de services correspondant à la requête pour la communication interprocessus, le module de services étant une DLL,
un processus conteneur prédéfini qui a été chargé avec les modules de services réalisant la communication interprocessus avec le premier processus par le canal de communication, le module de chargement (303) étant en outre conçu pour vérifier la situation de chargement du module de services, pour déterminer si le module de services correspondant à la requête pour la communication interprocessus est chargée ; et dans le cas contraire charger à nouveau le module de services et envoyer la réponse au premier processus, l'appareil comprenant en outre :
un module de détection (304) conçu pour détecter si un canal de communication existe avec le premier processus ; pour multiplexer le canal de communication si le canal de communication existe ; et pour déclencher le module d'établissement de canal pour établir un canal de communication avec le premier processus conformément à la requête pour une communication interprocessus si le canal de communication n'existe pas,
un nombre maximum de redémarrages du module de services étant fixé.

4. Appareil selon la revendication 3, la communication interprocessus étant une communication de mémoire partagée ou une communication par socket.

5. Support de stockage informatique pour stocker des instructions exécutables par ordinateur, lesdites instructions exécutables par ordinateur étant conçues pour amener l'ordinateur à exécuter un procédé pour publier des mises à jour des contacts le procédé consistant à :
recevoir une requête pour une communication interprocessus envoyée par un premier processus ; et
établir un canal de communication avec le premier processus selon la requête pour une communication interprocessus,
**caractérisé par**
le chargement d'un module de services correspondant à la requête pour la communication interprocessus, le module de services étant une DLL ; et
l'établissement d'une communication interprocessus entre un processus conteneur prédéfini qui est chargé avec le module de services et le premier processus par le canal de communication, l'étape d'établissement de la communication interprocessus entre le processus conteneur prédéfini qui est chargé avec le module de services et le premier processus par le canal de communication consistant en outre à :
vérifier une situation de chargement des modules de services, pour déterminer si le module de services correspondant à la requête pour une communication interprocessus est chargé ;
et
dans le cas contraire, charger à nouveau le module de services, et envoyer la réponse au premier processus, avant l'étape d'établissement du canal de communication avec le premier processus conformément à la requête pour la communication interprocessus, le procédé consistant en outre à :
détecter si un canal de communication existe avec le premier processus ;
multiplexer le canal de communication si le canal de communication existe avec le premier processus ; et
établir un canal de communication avec le premier processus conformément à la requête pour une communication interprocessus si le canal de communication n'existe pas avec le premier processus,
un nombre maximum de redémarrages du module de services étant fixé.

6. Support de stockage informatique selon la revendication 5, la communication interprocessus étant une communication de mémoire partagée ou une communication par socket.
